# FASCICULE DE BREVET EUROPEEN

(11) **EP 3 163 714 B1**
(45) Date de publication et mention de la délivrance du brevet: **26.09.2018**
(21) Numéro de dépôt: 16195532.3
(22) Date de dépôt: 25.10.2016
(51) Int. Cl.: H02J 9/06, H05B 33/08

(54) **LUMINAIRE DE SÉCURITÉ CONFIGURABLE**
KONFIGURIERBARE SICHERHEITSBELEUCHTUNG
CONFIGURABLE SECURITY LUMINAIRE

(30) Priorité: 28.10.2015 FR 1560327
(43) Date de publication de la demande: 03.05.2017
(73) Titulaire: Eaton Intelligent Power Limited, Dublin 4 (IE)
(72) Inventeur: SCHEER, Jean-Luc, 63200 RIOM (FR); MATHIEU, Stéphane, 63200 Riom (FR)
(74) Mandataire: Gendron, Vincent Christian

(56) Documents cités:
- WO-A2-2014/090931
- FR-A1- 2 929 461
- GB-A- 2 239 941
- US-A1- 2008 276 509

## Description

La présente invention concerne, de façon générale, le domaine de l'éclairage de sécurité et, plus particulièrement, un luminaire de sécurité destiné à assurer un éclairage de sécurité dans un bâtiment.

L'éclairage de sécurité est obligatoire pour les établissements recevant du public (ERP) et est destiné à assurer deux fonctions : l'éclairage d'évacuation et l'éclairage d'ambiance ou « anti-panique ». Parmi ces établissements, certains entrent dans la catégorie dite des « locaux à sommeil ». Ces établissements comportent en effet des locaux dédiés à l'hébergement des personnes et concernent par exemple les hôtels, hôpitaux, etc. Les normes d'éclairage de sécurité pour ce type de locaux sont définies par voie réglementaire et l'éclairage de sécurité doit ainsi être assuré par des luminaires de sécurité connus sous le nom de blocs autonomes d'éclairage de sécurité conformes notamment à la norme NF EN 60598-2-22. En particulier, l'éclairage d'évacuation, assuré par les blocs autonomes d'éclairage de sécurité doit permettre à toute personne d'accéder à l'extérieur, en assurant l'éclairage des cheminements, des sorties, des indications de balisage et des indications de changement de direction. Ces indications doivent être éclairées par l'éclairage de sécurité et se présentent typiquement sous la forme d'étiquettes signalétiques de forme rectangulaire, portées par le luminaire de sécurité et présentant un pictogramme dans des couleurs de sécurité normalisées fournissant une indication de balisage (une flèche, le mot « sortie », un personnage en train de courir, etc.). L'éclairage de sécurité doit être à mis à l'état de fonctionnement de veille pendant l'exploitation de l'établissement, étant dans lequel il est alimenté par le secteur, et bascule en état de fonctionnement de secours en cas de défaillance de l'éclairage normal de l'établissement (coupure secteur par exemple), état dans lequel il est alimenté par une source d'alimentation de sécurité. Un exemple est US2008/276509.

En particulier, en cas de défaillance de l'éclairage normal, le luminaire de sécurité passe en mode de fonctionnement de secours et est conçu pour fournir un éclairage de secours, cet éclairage étant alimenté par une source de sécurité constituée d'une batterie d'accumulateurs alimentant le luminaire de sécurité et pouvant être intégrée à celui-ci, et devant être basé sur un flux lumineux minimal, typiquement 8 lumens, pendant une durée assignée de fonctionnement, typiquement 5 heures.

Pour les locaux à sommeil, il est essentiel que les indications de balisage destinées à baliser les cheminements empruntés par le public pour l'évacuation des locaux, soient bien lisibles lorsque le luminaire de sécurité bascule en état de fonctionnement de secours. Les luminaires de sécurité peuvent être soit fixés aux parois latérales (murales), par exemple au-dessus d'une porte, soit suspendus au plafond du bâtiment.

Suivant la disposition d'implantation du luminaire, par exemple sur une paroi murale ou au plafond, le besoin d'éclairage de secours n'est le même lorsque le luminaire bascule de l'état de veille à l'état de fonctionnement de secours. Ainsi, lorsque le luminaire est suspendu au plafond, il est essentiel que la diffusion de l'éclairage de secours soit telle que le pictogramme de sécurité porté par le luminaire soit parfaitement éclairé, tandis qu'en installation murale, en particulier au-dessus d'une porte, il peut être souhaitable que le luminaire de sécurité puisse également éclairer en direction de cette porte.

Aussi, il existe un besoin pour un luminaire de sécurité capable d'assurer un éclairage de sécurité optimal en mode de fonctionnement de secours, dans toutes les configurations d'implantation, en particulier murale et au plafond.

A cet effet, l'invention concerne un luminaire de sécurité comprenant un module d'alimentation électrique et un boîtier présentant une paroi arrière apte à être fixée sur une surface de montage et une paroi latérale présentant un contour fermé délimitant une ouverture frontale à l'opposé de ladite paroi arrière, ledit boiter comportant un espace intérieur dans lequel est monté un module d'éclairage de veille et au moins un premier module d'éclairage de secours apte à émettre un flux lumineux sortant du luminaire dans une direction principale, ledit luminaire comprenant un module de commutation comportant une première entrée apte à être connectée à une source d'alimentation externe au luminaire, une deuxième entrée connectée au module d'alimentation électrique et une première et une deuxième sorties aptes à être connectées respectivement au module d'éclairage de veille et au premier module d'éclairage de secours, ledit module de commutation étant apte à connecter sa première entrée avec sa première sortie pour activer ledit module d'éclairage de veille dans un premier état de fonctionnement et sa deuxième entrée avec sa deuxième sortie pour activer ledit premier module d'éclairage de secours dans un deuxième état de fonctionnement, ledit module de commutation étant apte à basculer dans ledit deuxième état de fonctionnement en cas de défaillance de ladite source d'alimentation externe, caractérisé en ce que ledit module de commutation comprend un sous-module de commutation comportant une entrée connectée à la deuxième sortie du module de commutation et des première et deuxième sorties aptes à être connectées respectivement au premier module d'éclairage de secours et à un deuxième module d'éclairage de secours monté dans ledit boîtier et apte à émettre un flux lumineux sortant du luminaire dans une direction différente de ladite direction principale, pour relier sélectivement le premier et/ou le deuxième module d'éclairage de secours audit module d'alimentation électrique dans ledit deuxième état de fonctionnement.

Grâce à cet agencement, il est possible de sélectionner pour un même boîtier, des configurations d'éclairage de secours différentes, en fonction de l'activation de l'un et/ou l'autre des premier et deuxième modules d'éclairage de secours agencés au sein du boîtier et permettant de fournir des flux lumineux sortant du luminaire dans des directions différentes. Ainsi, cette faculté de pouvoir modifier la diffusion de l'éclairage de secours fourni par le luminaire suivant l'activation sélective de l'un et/ou l'autre des premier et deuxième modules d'éclairage de secours, permet d'adapter cette diffusion au besoin, en particulier de l'adapter à la disposition d'installation du boîtier, chacune des configurations d'éclairage de secours étant prévue pour être adaptée à une disposition d'installation possible du luminaire.

Ainsi, le même boîtier peut être adapté à différentes dispositions d'installation possibles, respectivement sur une paroi murale et de plafond, tout en permettant d'optimiser la diffusion de l'éclairage de secours fourni par le luminaire pour chacune des dispositions d'installation. L'utilisation d'une même référence de boîtier permet avantageusement de réaliser des économies d'échelle et de limiter le nombre de références qu'un installateur ou réparateur doit posséder pour travailler.

Avantageusement, ledit premier module d'éclairage de secours est agencé de sorte que ladite direction principale de diffusion du flux lumineux sortant du luminaire émis par le premier module d'éclairage de secours est orientée vers ladite ouverture frontale dudit boîtier et en ce que ledit deuxième module d'éclairage de secours est agencé de sorte que ladite direction de diffusion du flux lumineux sortant du luminaire émis par ledit deuxième module d'éclairage de secours est orientée vers des ouvertures latérales pratiquées dans la paroi latérale dudit boîtier.

Avantageusement, ledit sous-module de commutation est apte à connecter sa première sortie avec son entrée de façon à commander une première configuration d'éclairage de secours dans ledit deuxième état de fonctionnement, dans laquelle ledit premier module d'éclairage de secours est exclusivement alimenté.

De la sorte, lorsque le boîtier est fixé par sa paroi arrière sur une paroi de plafond, la sélection de la première configuration d'éclairage de secours dans laquelle le premier module d'éclairage de secours est activé, permet d'éclairer de façon optimale un pictogramme de sécurité porté par le luminaire et disposé en regard de ladite ouverture frontale.

Avantageusement, ledit sous-module de commutation est apte à connecter ses première et deuxième sorties conjointement avec son entrée de façon à commander une deuxième configuration d'éclairage de secours dans ledit deuxième état de fonctionnement, dans laquelle lesdits premier et deuxième modules d'éclairage de secours sont alimentés simultanément.

De la sorte, lorsque le boîtier est fixé par sa paroi arrière sur une paroi murale, la paroi latérale du boîtier surplombant par exemple une porte, la sélection de la deuxième configuration d'éclairage de secours dans laquelle le deuxième module d'éclairage de secours est activée en plus du premier module d'éclairage de secours, permet à la fois d'éclairer de façon optimale un pictogramme de sécurité disposé en regard de ladite ouverture et, également, d'éclairer latéralement au boîtier en direction de la porte.

Avantageusement, ledit sous-module de commutation comprend un organe de commande manoeuvrable manuellement. Ainsi, la sélection de l'une ou l'autre des première et deuxième configurations d'éclairage de secours pour adapter la diffusion de l'éclairage de secours à la disposition d'installation du luminaire, peut être opérée aisément par une simple manipulation de cet organe de commande par l'installateur.

Avantageusement, ledit premier module d'éclairage de secours comprend au moins une diode électroluminescente disposée de part et d'autre du plan transversal médian dudit boîtier en étant alignées suivant un axe longitudinal médian dudit boîtier.

Avantageusement, ledit deuxième module d'éclairage de secours comprend au moins une diode électroluminescente disposée de part et d'autre du plan transversal médian dudit boîtier, chaque diode étant reçu dans un logement adjacent à une partie longitudinale de ladite paroi latérale.

Avantageusement, ledit module d'éclairage de veille comprend une pluralité de diodes électroluminescentes agencées en étant alignées suivant un axe longitudinal médian dudit boîtier, de sorte à émettre un flux lumineux en direction de ladite ouverture frontale.

Avantageusement, le luminaire de sécurité comprend un support plan recevant au moins un pictogramme de sécurité apte à être fixé audit boitier en étant disposé en regard de ladite ouverture frontale.

De préférence, ledit support plan est agencé de sorte à s'étendre dans le plan longitudinal médian dudit boîtier ou dans le plan de ladite ouverture frontale.

D'autres caractéristiques et avantages de l'invention ressortiront clairement de la description qui en est faite ci-après, à titre indicatif et nullement limitatif, en référence aux dessins annexés, dans lesquels:
- la Figure 1 représente un luminaire de sécurité selon un mode de réalisation correspondant à une disposition d'installation murale du luminaire de l'invention ;
- la Figure 2 représente un luminaire de sécurité selon un mode de réalisation correspondant à une disposition d'installation au plafond du luminaire de l'invention ;
- la Figure 3 est un schéma illustrant l'agencement du module d'éclairage de veille d'une part, et des premier et deuxième modules d'éclairage de secours, d'autre part, au sein du boîtier, suivant un mode de réalisation préféré de l'invention ;
- la Figure 4 est un schéma fonctionnel illustrant le mode de commande de la configuration d'éclairage de secours.

Le luminaire de sécurité 1 de l'invention constitue un luminaire pour éclairage de secours conforme à la norme NF EN 60598-2-22. Il comporte un boîtier 2 de forme générale parallélépipédique. Le boîtier 2 est destiné à être rapporté sur une surface de montage, par exemple une paroi murale ou une paroi de plafond, par l'intermédiaire d'une paroi arrière 21 du boîtier 2 destinée à être fixée sur ladite surface de montage. Le boîtier 2 comporte également une paroi latérale 22, qui s'étend, en saillie, de la paroi arrière 21 vers une face avant du luminaire 1. La paroi latérale 21 du boîtier 2 présente un contour fermé 23 qui délimite une ouverture frontale au niveau de la face avant du luminaire, à l'opposé de la paroi arrière 21 du boîtier 2. Un ou plusieurs pictogrammes de sécurité 24, 25 sont prévues pour être disposés en regard de l'ouverture frontale délimitée par le contour fermé 23 de la paroi latérale 22 du boîtier 2 afin d'être mis en évidence par l'éclairage fourni par le luminaire. Ces pictogrammes de sécurité représentent des informations de balisage (flèche directionnelle, indication d'une issue de secours, etc.), dans des couleurs de sécurité prédéterminées, typiquement verte et blanche. En particulier, ils doivent satisfaire à des exigences définissant les caractéristiques d'affichage pour les indications de signalisation d'urgence, telles que définies notamment dans les normes ISO 7010:2011, ISO 3864-3:2012, ISO 3864-4 :2011 et EN 1838:2013. Ces pictogrammes se présentent préférentiellement sous la forme d'une étiquette amovible, portée par un support plan, transparent ou translucide, destiné à coopérer avec le boîtier de façon à disposer l'étiquette en regard de l'ouverture frontale du boîtier.

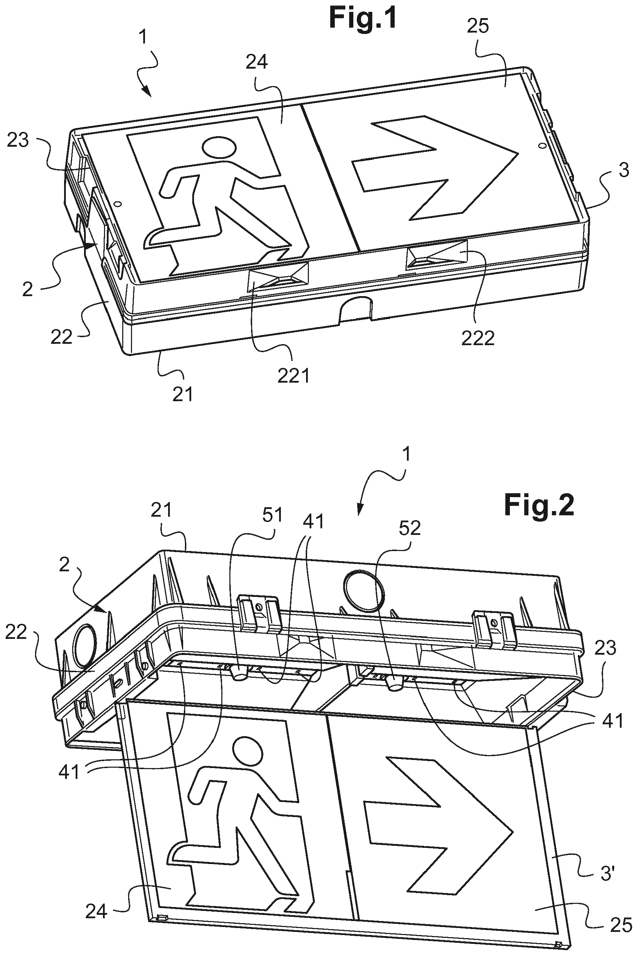

Suivant le mode de réalisation de la figure 1, qui correspond à une disposition d'installation murale du luminaire, où la paroi arrière 21 du boîtier est destinée à être rapportée sur une surface de montage de type paroi murale, le support plan 3 recevant les pictogrammes de sécurité, est agencé de sorte à s'étendre dans le plan de l'ouverture frontale du boîtier 2. Autrement dit, le boîtier 2 et le support plan 3 sont rapportés l'un à l'autre suivant sensiblement ce même plan, de sorte qu'une face arrière du support plan vienne sensiblement en appui contre le contour fermé 23 de la paroi latérale du boîtier 2.

Suivant le mode de réalisation de la figure 2, qui correspond à une disposition d'installation au plafond du luminaire, où la paroi arrière 21 du boîtier 2 est destinée à être rapportée sur une surface de montage de type paroi de plafond, le support plan 3' recevant les pictogrammes de sécurité est agencé de sorte à s'étendre dans le plan longitudinal médian du boîtier 2. Par plan longitudinal médian, on entend le plan longitudinal médian vertical du boîtier. Autrement dit, le boîtier 2 et le support plan 3' sont rapportés l'un à l'autre de sorte que le support plan 3' recevant les pictogrammes de sécurité fait saillie depuis le contour fermé de la paroi latérale 22 du boîtier 2, dans le plan longitudinal médian du boîtier. Le support plan 3' est ainsi suspendu au boîtier 2.

Comme indiqué plus haut, l'information représentée par le pictogramme de sécurité est destinée à être mise en évidence au moyen d'un éclairage fourni par le luminaire de sécurité. Dans un premier état de fonctionnement du luminaire, correspondant à un état de fonctionnement dit de veille, où le luminaire est alimenté par une source d'alimentation externe au luminaire, constituée par exemple par le secteur auquel est raccordé le luminaire lorsqu'il est installé dans un bâtiment, un module d'éclairage de veille monté à l'intérieur du boîtier 2 est destiné à assurer cet éclairage.

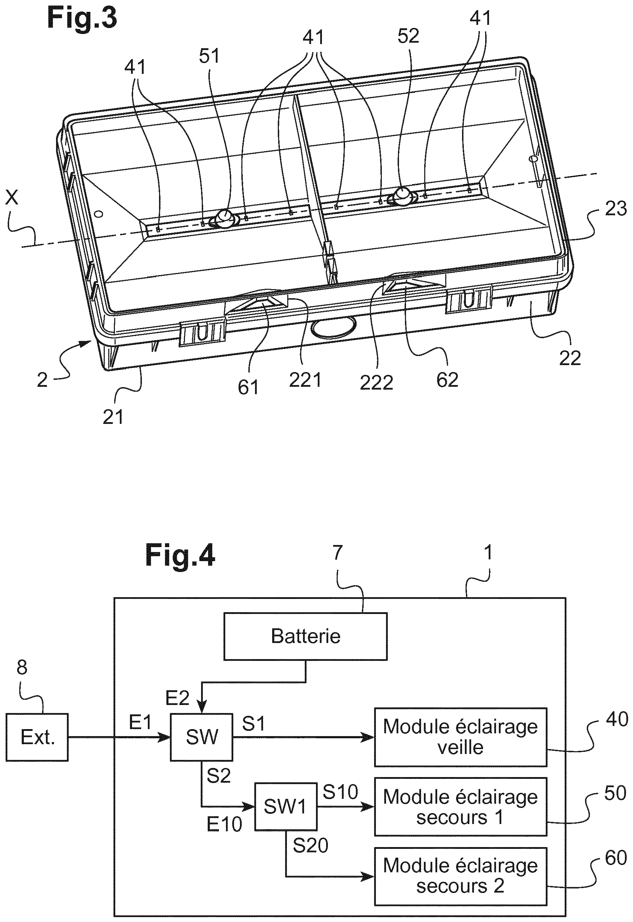

Comme illustré à la figure 3, le module d'éclairage de veille est constitué d'une pluralité de diodes électroluminescentes 41, huit selon l'exemple de réalisation, montées alignées sur un circuit imprimé à l'intérieur du boîtier 2 suivant un axe longitudinal médian X du boîtier 2, sur sensiblement toute la longueur du boîtier 2, et disposées de sorte à émettre un flux lumineux en direction de l'ouverture frontale du boîtier 2.

Suivant le mode de réalisation illustré à la figure 1, correspondant à une disposition d'installation murale du luminaire, les pictogrammes de sécurité, agencés au niveau du support plan 3 s'étendant dans le plan de l'ouverture frontale du boîtier, sont éclairés par l'arrière par la pluralité de diodes électroluminescentes 41 du module d'éclairage de veille lorsque ce dernier est activé et alimenté par le secteur.

Par contre, suivant le mode de réalisation illustré à la figure 2, correspondant à une disposition d'installation au plafond du luminaire, les pictogrammes de sécurité, agencés au niveau du support plan 3' s'étendant en saillie de l'ouverture frontale dans le plan longitudinal médian du boîtier 2, sont éclairés par une tranche dudit support plan 3 s'étendant sensiblement en regard de la pluralité de diodes électroluminescentes 41 du module d'éclairage de veille.

Aussi, en cas de défaillance du secteur (coupure par exemple), le luminaire est conçu pour basculer dans un état de fonctionnement dit de secours et un module d'éclairage de secours est destiné à suppléer le module d'éclairage de veille et à fournir un éclairage de secours, alimenté par un module d'alimentation électrique, constitué par exemple d'une ou plusieurs batteries d'accumulateurs montées dans le boîtier 2 du luminaire, et apte à fournir un un flux lumineux minimal, par exemple 8 lumens, pendant une durée assignée de fonctionnement, par exemple 5 heures.

Comme illustré à la figure 3, un premier module d'éclairage de secours monté dans le boîtier 2 du luminaire, est constitué de deux diodes électroluminescente 51, 52 montées sur le circuit imprimé à l'intérieur du boîtier 2 en étant disposées respectivement de part et d'autre du plan transversal médian du boîtier 2 et alignées suivant l'axe longitudinal médian X du boîtier 2. De préférence, chaque diode électroluminescente 51, 52 du premier module d'éclairage de secours est couplée sur le circuit imprimée avec une lentille de diffusion de la lumière. Les diodes électroluminescentes 51, 52 sont agencées au sein du boîtier 2 de sorte que la direction principale de diffusion du flux lumineux sortant du luminaire émis par le premier module d'éclairage de secours soit orientée essentiellement vers l'ouverture frontale en face avant du boîtier 2. Ainsi, dans l'état de fonctionnement, dit de secours, du luminaire, les deux diodes 51, 52 du premier module d'éclairage de secours alimentées par la batterie d'accumulateurs, permettent d'assurer un éclairement de secours de 8 lumens pendant la durée assignée au niveau des deux pictogrammes de sécurité 24, 25 portés par le support plan 3, 3' monté sur le boîtier, soit par l'arrière du support plan 3, dans la disposition d'installation murale du luminaire (figure 1), soit par la tranche du support plan 3' dans la disposition d'installation au plafond du luminaire (figure 2).

Dans la disposition d'installation murale du luminaire comme illustré à la figure 1, on souhaite pouvoir adapter l'éclairage de secours fourni dans l'état de fonctionnement dit de secours, de façon à pouvoir assurer non seulement un éclairement de secours satisfaisant au niveau des pictogrammes de sécurité, mais également un éclairement de secours apte à éclairer par exemple en direction d'une porte à l'aplomb de laquelle est installé le luminaire.

Ainsi, on prévoit selon l'invention un deuxième module d'éclairage de secours monté dans le boîtier 2 et apte à émettre un flux lumineux sortant du luminaire dans une direction différente de la direction principale de diffusion du flux lumineux émis par les diodes 51, 52 du premier module d'éclairage de secours. En particulier, comme illustré à la figure 3 notamment, le deuxième module d'éclairage de secours est agencé au sein du boîtier 2 de sorte que la direction de diffusion du flux lumineux sortant du luminaire émis par ce deuxième module d'éclairage de secours soit orientée vers des ouvertures latérales 221, 222 pratiquées dans la paroi latérale 22 du boîtier 2, préférentiellement dans la partie longitudinale inférieure de la paroi latérale 22, destinée à venir directement en surplomb d'une porte dans la disposition d'installation murale du boîtier. Plus précisément, le deuxième module d'éclairage de secours comprend deux diodes électroluminescentes 61, 62 montées sur le circuit imprimé à l'intérieur du boîtier 2 en étant disposées respectivement de part et d'autre du plan transversal médian du boîtier 2, chaque diode 61,62 étant reçue dans un logement adjacent à la partie longitudinale de la paroi latérale 22 et débouchant sur l'extérieur du boîtier 2 au niveau des ouvertures latérales 221, 222.

Ainsi, en configuration d'installation murale et dans l'état de fonctionnement, dit de secours, du luminaire, les deux diodes 61, 62 du deuxième module d'éclairage de secours alimentées par la batterie d'accumulateurs, permettent d'assurer un éclairement de secours de 8 lumens pendant la durée assignée en direction de la porte au-dessus de laquelle est installé le luminaire, tandis que les deux diodes 51, 52 du premier module d'éclairage permettent d'assurer l'éclairement de secours de 8 lumens des deux pictogrammes de sécurité.

Conformément à l'invention, la configuration d'éclairage de secours, dépendant de l'activation de l'un et/ou l'autre des premier et deuxième modules d'éclairage de secours du boîtier, peut être sélectionnée suivant la disposition d'installation requise pour le luminaire, parmi une installation murale ou au plafond.

Le mode de commande du luminaire est décrit schématiquement en référence à la figure 4.

Le luminaire de sécurité 1 comporte un module d'alimentation électrique 7, constitué de préférence par une ou plusieurs batteries d'accumulateurs intégrées au boîtier du luminaire, et est apte à être connectée à une source d'alimentation externe 8, constituée par le réseau électrique (secteur) du bâtiment auquel il est raccordé. Le luminaire de sécurité 1 comporte également un module de commutation SW, la source d'alimentation externe 8 étant connectée à une première entrée E1 du module de commutation et le module d'alimentation 7 du luminaire étant connecté à une deuxième entrée E2 du module de commutation SW. Le module de commutation SW est en outre apte à être connecté d'une part, au premier module d'éclairage de veille 40, par l'intermédiaire d'une première sortie S1 et, d'autre part, au système d'éclairage de secours du luminaire constitué des premier et deuxième modules d'éclairage de secours 50, 60, par l'intermédiaire d'une deuxième sortie S2, comme il sera décrit plus en détail ci-après. Le module de commutation SW est conçu pour connecter sa première entrée et sa première sortie et ainsi permettre l'alimentation du premier module d'éclairage de veille 40, constitué des diodes 41, par le secteur dans l'état de fonctionnement de veille du luminaire.

En cas de défaillance du secteur, le luminaire bascule dans le deuxième état de fonctionnement dit de secours, où l'éclairage de secours est prévu pour être alimenté par le module d'alimentation électrique 7 du luminaire pour prendre le relais du module d'éclairage de veille. Aussi, en cas de défaillance du secteur, le module de commutation SW est apte à connecter sa deuxième entrée E2 et sa deuxième sortie S2 et ainsi permettre l'alimentation du système d'éclairage de secours constitué par les premier et deuxième modules d'éclairage de secours 50, 60, par le module d'alimentation électrique 7 du luminaire 1. Pour ce faire, le module de commutation SW coopère avec un sous-module de commutation SW1, présentant une entrée E10 directement connectée à la deuxième sortie S2 du module de commutation SW et deux sorties S10, S20 destinées à être connectées respectivement au premier module d'éclairage de secours 50, constitué des deux diodes 51, 52 selon l'exemple de réalisation de la figure 3 et au deuxième module d'éclairage de secours 60, constitué des deux diodes 51, 52 selon l'exemple de réalisation de la figure 3.

Le sous-module de commutation SW1 comprend un organe de commande (non représenté) manoeuvrable manuellement, permettant de sélectionner la configuration d'éclairage de secours souhaité en fonction de la disposition d'installation du luminaire.

Ainsi, dans une disposition d'installation au plafond du luminaire, l'organe de commande est manoeuvré de sorte à sélectionner une première configuration d'éclairage de secours dans laquelle, dans l'état de fonctionnement dit de secours du luminaire, seul le premier module d'éclairage 50 constitué des deux diodes 51, 52 est activé, de façon à assurer l'éclairement de secours au niveau des pictogrammes. Aussi, dans cette configuration d'éclairage de secours sélectionnée, le sous-module de commutation SW1 est conçu pour connecter sa première sortie S10 avec son entrée E10, de façon à commander cette première configuration d'éclairage de secours, dans laquelle le premier module d'éclairage de secours 50 est exclusivement alimenté.

Dans une disposition d'installation murale au dessus d'une porte du luminaire, l'organe de commande est manoeuvré de sorte à sélectionner une deuxième configuration d'éclairage de secours dans laquelle, dans l'état de fonctionnement dit de secours du luminaire, les premier et deuxième modules d'éclairage de secours 50, 60 sont activés simultanément, de façon à assurer un éclairement de secours à la fois frontalement, au niveau des pictogrammes, et latéralement, en direction de la porte. Aussi, dans cette deuxième configuration d'éclairage de secours sélectionnée, le sous-module de commutation SW1 est conçu pour connecter ses première et deuxième sorties S10, S20 conjointement avec son entrée E10, de façon à commander cette deuxième configuration d'éclairage de secours, dans laquelle les premier et deuxième modules d'éclairage de secours 50, 60 sont alimentés simultanément.

## Revendications

1. Luminaire de sécurité (1) comprenant un module d'alimentation électrique (7), comportant une ou plusieurs batteries d'accumulateurs, et un boîtier (2) présentant une paroi arrière (21) apte à être fixée sur une surface de montage et une paroi latérale (22) présentant un contour fermé (23) délimitant une ouverture frontale à l'opposé de ladite paroi arrière, ledit boiter (2) comportant un espace intérieur dans lequel est monté un module d'éclairage de veille (40) et au moins un premier module d'éclairage de secours (50) apte à émettre un flux lumineux sortant du luminaire dans une direction principale, ledit luminaire comprenant un module de commutation (SW) comportant une première entrée (E1) apte à être connectée à une source d'alimentation externe (8) au luminaire, une deuxième entrée (E2) connectée au module d'alimentation électrique (7) et une première et une deuxième sorties (S1,S2) aptes à être connectées respectivement au module d'éclairage de veille (40) et au premier module d'éclairage de secours (50), ledit module de commutation étant apte à connecter sa première entrée avec sa première sortie pour activer ledit module d'éclairage de veille dans un premier état de fonctionnement et sa deuxième entrée avec sa deuxième sortie pour activer ledit premier module d'éclairage de secours dans un deuxième état de fonctionnement, ledit module de commutation basculant du premier état de fonctionnement dans ledit deuxième état de fonctionnement en cas de défaillance de ladite source d'alimentation externe, **caractérisé en ce que** ledit module de commutation comprend un sous-module de commutation (SW1) comportant une entrée (E10) connectée à la deuxième sortie du module de commutation et des première et deuxième sorties (S10, S20) aptes à être connectées respectivement au premier module d'éclairage de secours (50) et à un deuxième module d'éclairage de secours (60) monté dans ledit boîtier et apte à émettre un flux lumineux sortant du luminaire dans une direction différente de ladite direction principale, pour relier sélectivement le premier et/ou le deuxième module d'éclairage de secours (50, 60) audit module d'alimentation électrique (7) dans ledit deuxième état de fonctionnement, le sous-module de commutation SW1 comprend un organe de commande manoeuvrable manuellement, permettant de sélectionner la configuration d'éclairage de secours souhaité en fonction de la disposition d'installation du luminaire.

2. Luminaire de sécurité selon la revendication 1, **caractérisé en ce que** ledit premier module d'éclairage de secours (50) est agencé de sorte que ladite direction principale de diffusion du flux lumineux sortant du luminaire émis par ledit premier module d'éclairage de secours est orientée vers ladite ouverture frontale dudit boîtier et **en ce que** ledit deuxième module d'éclairage de secours (60) est agencé de sorte que ladite direction de diffusion du flux lumineux sortant du luminaire émis par ledit deuxième module d'éclairage de secours est orientée vers des ouvertures latérales (221, 222) pratiquées dans la paroi latérale (22) dudit boîtier.

3. Luminaire de sécurité selon l'une quelconque des revendications 1 ou 2, **caractérisé en ce que** ledit sous-module de commutation (SW1) est apte à connecter sa première sortie avec son entrée de façon à commander une première configuration d'éclairage de secours dans ledit deuxième état de fonctionnement, dans laquelle ledit premier module d'éclairage de secours (50) est exclusivement alimenté.

4. Luminaire de sécurité selon l'une quelconque des revendications précédentes, **caractérisé en ce que** ledit sous-module de commutation est apte à connecter ses première et deuxième sorties conjointement avec son entrée de façon à commander une deuxième configuration d'éclairage de secours dans ledit deuxième état de fonctionnement, dans laquelle lesdits premier et deuxième modules d'éclairage de secours (50, 60) sont alimentés simultanément.

5. Luminaire de sécurité selon l'une quelconque des revendications précédentes, **caractérisé en ce que** ledit premier module d'éclairage de secours (50) comprend au moins une diode électroluminescente (51, 52) disposée de part et d'autre du plan transversal médian dudit boîtier en étant alignées suivant un axe longitudinal médian (X) dudit boîtier (2).

6. Luminaire de sécurité selon l'une quelconque des revendications précédentes, **caractérisé en ce que** ledit deuxième module d'éclairage de secours (60) comprend au moins une diode électroluminescente (61, 62) disposée de part et d'autre du plan transversal médian dudit boîtier, chaque diode étant reçue dans un logement adjacent à une partie longitudinale de ladite paroi latérale (22).

7. Luminaire de sécurité selon l'une quelconque des revendications précédentes, **caractérisé en ce que** ledit module d'éclairage de veille (40) comprend une pluralité de diodes électroluminescentes (41) agencées en étant alignées suivant un axe longitudinal médian (X) dudit boîtier (2), de sorte à émettre un flux lumineux en direction de ladite ouverture frontale.

8. Luminaire de sécurité selon l'une quelconque des revendications précédentes, **caractérisé en ce qu'**il comprend un support plan (3) recevant au moins un pictogramme de sécurité (24, 25) apte à être fixé audit boitier (2) en étant disposé en regard de ladite ouverture frontale.

9. Luminaire selon la revendication 8, **caractérisé en ce que** ledit support plan (3) est agencé de sorte à s'étendre dans le plan longitudinal médian dudit boîtier ou dans le plan de ladite ouverture frontale.

## Patentansprüche

1. Sicherheitsleuchte (1) mit einem elektrischen Versorgungsmodul (7) mit einer oder mehreren Akkumulatorbatterien und einem Gehäuse (2), das eine Rückwand (21), die an einer Montageoberfläche befestigt werden kann, und eine Seitenwand (22), die eine geschlossene Kontur (23) aufweist, die eine vordere Öffnung entgegengesetzt zur Rückwand begrenzt, aufweist, wobei das Gehäuse (2) einen Innenraum umfasst, in dem ein Bereitschaftsbeleuchtungsmodul (40) und mindestens ein erstes Notbeleuchtungsmodul (40) montiert sind, das einen Lichtstrom, der von der Leuchte ausgeht, in einer Hauptrichtung emittieren kann, wobei die Leuchte ein Umschaltmodul (SW) mit einem ersten Eingang (E1), der mit einer zur Leuchte externen Versorgungsquelle (8) verbunden werden kann, einem zweiten Eingang (E2), der mit dem elektrischen Versorgungsmodul (7) verbunden ist, und einem ersten und einem zweiten Ausgang (S1, S2), die mit dem Bereitschaftsbeleuchtungsmodul (40) bzw. mit dem ersten Notbeleuchtungsmodul (50) verbunden werden können, umfasst, wobei das Umschaltmodul seinen ersten Eingang mit seinem ersten Ausgang verbinden kann, um das Bereitschaftsbeleuchtungsmodul in einem ersten Betriebsmodus zu aktivieren, und seinen zweiten Eingang mit seinem zweiten Ausgang verbinden kann, um das erste Notbeleuchtungsmodul in einem zweiten Betriebszustand zu aktivieren, wobei das Umschaltmodul vom ersten Betriebszustand in den zweiten Betriebszustand im Fall eines Ausfalls der externen Versorgungsquelle umschaltet, **dadurch gekennzeichnet, dass** das Umschaltmodul ein Umschaltuntermodul (SW1) mit einem Eingang (E10), der mit dem zweiten Ausgang des Umschaltmoduls verbunden ist, und einem ersten und einem zweiten Ausgang (S10, S20) umfasst, die mit dem ersten Notbeleuchtungsmodul (50) und mit einem zweiten Notbeleuchtungsmodul (60) verbunden werden können, das im Gehäuse montiert ist und einen Lichtstrom, der von der Leuchte ausgeht, in einer von der Hauptrichtung verschiedenen Richtung emittieren kann, um selektiv das erste und/oder das zweite Notbeleuchtungsmodul (50, 60) mit dem elektrischen Versorgungsmodul (7) im zweiten Betriebszustand zu verbinden, wobei das Umschaltuntermodul SW1 eine manuell betätigbare Steuereinrichtung umfasst, die es ermöglicht, die gewünschte Notbeleuchtungskonfiguration in Abhängigkeit von der Installationsanordnung der Leuchte auszuwählen.

2. Sicherheitsleuchte nach Anspruch 1, **dadurch gekennzeichnet, dass** das erste Notbeleuchtungsmodul (50) so angeordnet ist, dass die Hauptrichtung der Ausstrahlung des Lichtstroms, der von der Leuchte ausgeht, der durch das erste Notbeleuchtungsmodul emittiert wird, zur vorderen Öffnung des Gehäuses orientiert ist, und dass das zweite Notbeleuchtungsmodul (60) so angeordnet ist, dass die Richtung der Ausstrahlung des Lichtstroms, der von der Leuchte ausgeht, der durch das zweite Notbeleuchtungsmodul emittiert wird, zu seitlichen Öffnungen (221, 222) orientiert ist, die in der Seitenwand (22) des Gehäuses ausgebildet sind.

3. Sicherheitsleuchte nach einem der Ansprüche 1 oder 2, **dadurch gekennzeichnet, dass** das Umschaltuntermodul (SW1) seinen ersten Ausgang mit seinem Eingang verbinden kann, um eine erste Notbeleuchtungskonfiguration im zweiten Betriebszustand zu steuern, in der das erste Notbeleuchtungsmodul (50) ausschließlich versorgt wird.

4. Sicherheitsleuchte nach einem der vorangehenden Ansprüche, **dadurch gekennzeichnet, dass** das Umschaltuntermodul seinen ersten und zweiten Ausgang gemeinsam mit seinem Eingang verbinden kann, um eine zweite Notbeleuchtungskonfiguration im zweiten Betriebszustand zu steuern, in der das erste und das zweite Notbeleuchtungsmodul (50, 60) gleichzeitig versorgt werden.

5. Sicherheitsleuchte nach einem der vorangehenden Ansprüche, **dadurch gekennzeichnet, dass** das erste Notbeleuchtungsmodul (50) mindestens eine Leuchtdiode (51, 52) umfasst, die auf beiden Seiten der transversalen Medianebene des Gehäuses angeordnet ist und die gemäß einer longitudinalen Medianachse (X) des Gehäuses (2) ausgerichtet sind.

6. Sicherheitsleuchte nach einem der vorangehenden Ansprüche, **dadurch gekennzeichnet, dass** das zweite Notbeleuchtungsmodul (60) mindestens eine Leuchtdiode (61, 62) umfasst, die auf beiden Seiten der transversalen Medianebene des Gehäuses angeordnet ist, wobei jede Diode in einer Aufnahme benachbart zu einem longitudinalen Teil der Seitenwand (22) aufgenommen ist.

7. Sicherheitsleuchte nach einem der vorangehenden Ansprüche, **dadurch gekennzeichnet, dass** das Bereitschaftsbeleuchtungsmodul (40) eine Vielzahl von Leuchtdioden (41) umfasst, die angeordnet sind, indem sie gemäß einer longitudinalen Medianachse (X) des Gehäuses (2) ausgerichtet sind, um einen Lichtstrom in der Richtung der vorderen Öffnung zu emittieren.

8. Sicherheitsleuchte nach einem der vorangehenden Ansprüche, **dadurch gekennzeichnet, dass** sie einen ebenen Träger (3) umfasst, der mindestens ein Sicherheitspiktogramm (24, 25) aufnimmt, das am Gehäuse (2) befestigt werden kann, indem es gegenüber der vorderen Öffnung angeordnet wird.

9. Leuchte nach Anspruch 8, **dadurch gekennzeichnet, dass** der ebene Träger (3) so angeordnet ist, dass er sich in der longitudinalen Medianebene des Gehäuses oder in der Ebene der vorderen Öffnung erstreckt.

## Claims

1. A safety lighting (1) comprising a power supply module (7), including one or more power accumulators, and a casing (2) provided with a rear wall (21) intended to be secured on a mounting surface and a side wall (22) having a closed outline (23) delimiting a frontal opening opposite to said rear wall, said casing (2) including an internal space in which is mounted a standby lighting module (40) and at least a first emergency lighting module (50) intended to emit a luminous flow leaving the lighting in a main direction, said lighting comprising a switching module (SW) including a first input (E1) intended to be connected to a supplying source (8) external to the lighting, a second input (E2) connected to the power supply module (7) and a first and a second outputs (S1, S2) intended to be connected to the standby lighting module (40) and to the first emergency lighting module (50) respectively, said switching module being intended to connect its first input with its first output to activate said standby lighting module in a first operating state and its second input with its second output to activate said first emergency lighting module in a second operating state, said switching module switching from the first operating state to said second operating state in the event of a failure of said external supplying source, **characterized in that** said switching module comprises a secondary switching module SW1 including an input (E10) connected to the second output of the switching module and first and second outputs (S10, S20) intended to be respectively connected to the first emergency lighting module (50) and to a second emergency lighting module (60) arranged in said casing and intended to emit a luminous flow leaving the lighting in a direction different from said main direction, to selectively connect the first and/or the second emergency lighting module (50, 60) to said power supply module (7) within said second operating state, the secondary switching module SW1 comprises a manually operable control unit, making it possible to select the desired emergency lighting configuration according to the lighting installation arrangement.

2. The safety lighting according to claim 1, **characterized in that** said first emergency lighting module (50) is arranged so that said main diffusion direction of the luminous flow leaving the lighting, emitted by said first emergency lighting module is directed towards said frontal opening of said casing and **in that** said second emergency lighting module (60) is arranged so that said diffusion direction of the luminous flow leaving the lighting, emitted by said second emergency lighting module is directed towards side openings (221, 222) provided within the side wall (22) of said casing.

3. The safety lighting according to any of claims 1 or 2, **characterized in that** said secondary switching module (SW1) is intended to connect its first output with its input in order to control a first emergency lighting configuration within said second operating state, in which said first emergency lighting module (50) is exclusively fed.

4. The safety lighting according to any of the preceding claims, **characterized in that** said secondary switching module is intended to connect its first and second outputs jointly with its input in order to control a second emergency lighting configuration into said second operating state, in which said first and second emergency lighting modules (50, 60) are simultaneously fed.

5. The safety lighting according to any of the preceding claims, **characterized in that** said first emergency lighting module (50) comprises at least an electroluminescent diode (51, 52) laid out on both sides of the transversal median plan of said casing while being aligned along a longitudinal median axis (X) of said casing (2).

6. The safety lighting according to any of the preceding claims, **characterized in that** said second emergency lighting module (60) comprises at least an electroluminescent diode (61, 62) laid out on both sides of the transversal median plan of said casing, each diode being received in a housing adjacent to a longitudinal part of said side wall (22).

7. The safety lighting according to any of the preceding claims, **characterized in that** said standby lighting module (40) comprises a plurality of electroluminescent diodes (41) arranged to be aligned along a longitudinal median axis (X) of said casing (2), in order to emit a luminous flow in direction of said frontal opening.

8. The safety lighting according to any of the preceding claims, **characterized in that** it comprises a flat support (3) receiving at least a safety pictogram (24, 25) intended to be secured to said casing (2) while being laid out facing to said frontal opening.

9. The light according to claim 8, **characterized in that** said flat support (3) is arranged in order to extend within the longitudinal median plan of said casing or within the plan of said frontal opening.
